# EUROPEAN PATENT APPLICATION

(11) **EP 1 788 368 A1**
(43) Date of publication of application: **23.05.2007**
(21) Application number: 06023651.0
(22) Date of filing: 14.11.2006
(51) Int. Cl.: G01J 1/42, G01J 1/58

(54) **Ultra violet detector/indicator**

(30) Priority: 16.11.2005 CN 200510101484
(71) Applicant: Wong,, Tommy Chi-Kin, Kowloon Bay Hong Kong (CN)
(72) Inventor: Wong,, Tommy Chi-Kin, Kowloon Bay Hong Kong (CN)
(74) Representative: Haft, von Puttkamer, Berngruber

(57) **Abstract**

An ultraviolet detector/indicator comprises of a column, hemisphere, cake, or wire where a light receiving front and a light emitting front are respectively installed on the two ends with connections, and a light guide unit, which contains the material that strengthens the ultraviolet or adjusts the spectrum is installed between the two fronts. According to the foregoing structure, the ultraviolet detector/indicator installed in the enclosure of an ultraviolet sterilization apparatus is exempted from the external power source for transferring invisible ultraviolet into visible light. In addition, a colorimetric scale printed with various color shades is installed to assist the user in verifying the ultraviolet strengths should aging or damage of the ultraviolet lamp fail functions of the apparatus. Furthermore, an interface connecting to the enclosure is installed to facilitate the replacement of ultraviolet detector/indicator.

## Description

### BACKGROUND OF THE INVENTION

### I. Field of the Invention

The invention relates to an "ultraviolet detector/indicator", more particularly, an indicator installed in an apparatus utilizing the ultraviolet light for sterilization and photo purification, the ultraviolet cure apparatus, or any ultraviolet-functioned apparatus to alert replacement of the ultraviolet lamp.

### II. Description of the Prior Art

With reference to the existing technology, the ultraviolet sterilization and photo purification apparatus, the ultraviolet cure apparatus, or any apparatus utilizing the ultraviolet for sterilization, detection, and indication of the ultraviolet strengths rely on an electronic sensor that has digital readings. However, the electronic sensor of the prior art is inconvenient in terms of utilization and maintenance because it is comparatively expensive and needs an external power source to support its operation.

### SUMMARY OF THE INVENTION

The objective of the invention is to provide an "ultraviolet detector/indicator" to solve the technical issues caused by aging or damage of the ultraviolet lamp, which consequently fails all the functions of ultraviolet sterilization and photo purification apparatus.

To achieve the foregoing objective, the invention adopts embodiments as follows:

An ultraviolet detector/indicator, whose body is a column, hemisphere, cake, or wire, which comprises of a light receiving front on one end and a light emitting front on the other.

The ultraviolet detector/indicator described by the invention, whose body is either of a column or cake type, in which a light guide unit is installed between the back of the light receiving and light emitting fronts. The light guide unit may be a column or a flexible wire.

The material strengthening the light or adjusting the spectrum permeates through the ultraviolet detector/indicator described by the invention.

A colorimetric scale printed with various color shades is installed around or beside the light emitting front of the ultraviolet detector/indicator described by the invention.

The material transferring ultraviolet energy into visible light permeates through the light receiving front of the ultraviolet detector/indicator described by the invention.

The material permeating through the light receiving front of the ultraviolet detector/indicator described by the invention is silica gel and its derivatives, PTFE (Polytetrafluoroethylene) and its derivatives, or PMMA (Poly Methyl Methacrylate) and its derivatives.

The light receiving front described by the invention is an object pervious to ultraviolet and wherein permeates the material transferring the ultraviolet energy into red light.

The light receiving front described by the invention is an object pervious to ultraviolet and wherein permeates the material transferring the ultraviolet energy into green light.

The light receiving front described by the invention is an object pervious to ultraviolet and wherein permeates the material transferring the ultraviolet energy into yellow light.

The light receiving front described by the invention is an object pervious to ultraviolet and wherein permeates the fluorescent powder emitting colored light.

The light receiving front described by the invention is an object pervious to ultraviolet and wherein permeates the phosphorus emitting visible light.

The material transferring the ultraviolet energy into colored visible light is lodged in a hollow cubic of the ultraviolet detector/indicator described by the invention.

Characters or signs, pervious or opaque to visible light emitted by the indication point, are installed on the surface of the light emitting front of the ultraviolet detector/indicator described by the invention.

An interface of the enclosure is installed in the ultraviolet detector/indicator described by the invention.

Compared to the existing technology, the one adopted by the invention exempts the light emitting front, enclosed in the ultraviolet sterilization and photo purification apparatus, from the external power source for transferring the invisible ultraviolet into colored visible light. In addition, the colorimetric scale printed with various color shades assists the user in verifying the ultraviolet strengths should the apparatus fail in all its functions due to aging or damage of the ultraviolet lamp. Furthermore, an interface is installed to the apparatus enclosure for facilitating the replacement.

### BRIEF DESCRIPTION OF THE DRAWINGS

Fig. 1 is a sectional view showing embodiment 1 of the present invention.
Fig. 1-1, 1-2, and 1-3 are sectional views showing parts of embodiment 1 per Fig. 1.
Fig. 2 is a sectional view showing embodiment2 of the present invention.
Fig. 2-1, 2-2, and 2-3 are sectional views showing parts of embodiment 2 per Fig. 2.
Fig. 3 is a sectional view showing embodiment 3 of the present invention.
Fig. 3-1, 3-2, and 3-3 are sectional views showing parts of embodiment 3 per Fig. 3.
Fig. 4 is a sectional view showing embodiment 4 of the present invention.
Fig. 4-1 and 4-2 are sectional views showing parts of embodiment 4 per Fig. 4.
Fig. 5 is a sectional view showing application 1 of the present invention - installation in an ultraviolet sterilization and photocatalyzed liquid process apparatus.
Fig. 6 is a sectional view showing application 2 of the present invention - installation in an ultraviolet sterilization and photocatalyzed vapor processing apparatus.
Fig. 7-1 is a sectional view showing application 3 of the present invention - installation in an ultraviolet sterilization and photocatalyzed liquid processing apparatus.
Fig. 7-2 is a sectional view showing the ultraviolet detector/indicator for application 3 per Fig. 7-1.
Fig. 8-1 and 8-2 are sectional views showing two embodiments of the light receiving front.
Fig. 9 is a sectional view showing that the light receiving front uses the optical fiber to have light emission at the remote end.
Fig. 10-1 to 10-6 are structural views showing two embodiments of the interface.

### DESCRIPTION OF THE PREFERRED EMBODIMENT

Further structure, installation, and desirable features of the invention will be better understood from the detailed description and drawings that follow in which various embodiments of the disclosed invention are illustrated by way of example.

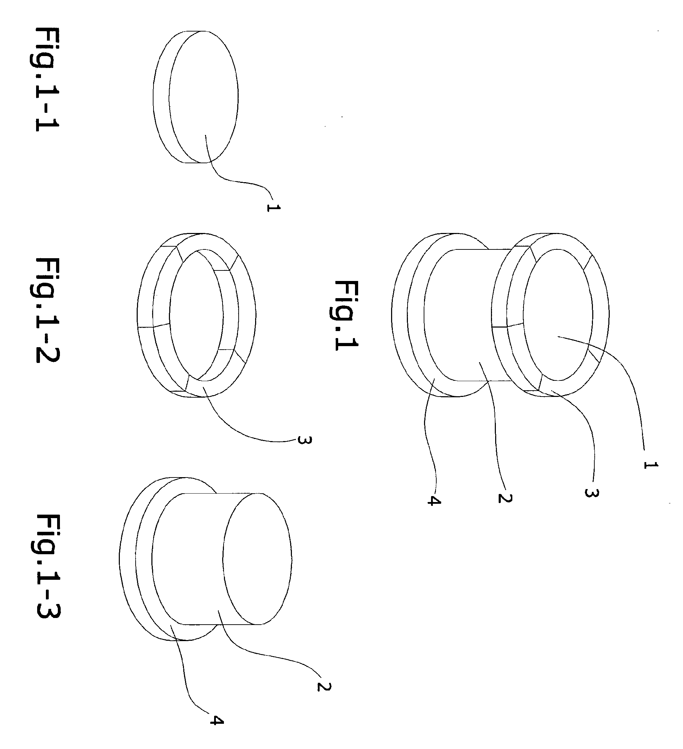

Fig. 1 is a sectional view showing embodiment 1 of the invention, wherein the ultraviolet detector/indicator is a column, comprising of a light receiving front 1 installed on one end, a light emitting front 4 installed on the other end, a light guide unit 2 installed between the two fronts as well as a colorimetric scale 3 which is printed with various color shades and rims respective to the two fronts on the ends. The light receiving front 1, light emitting front 4 and light guide unit 2 may be separate units or may be integrated into a collective structure.

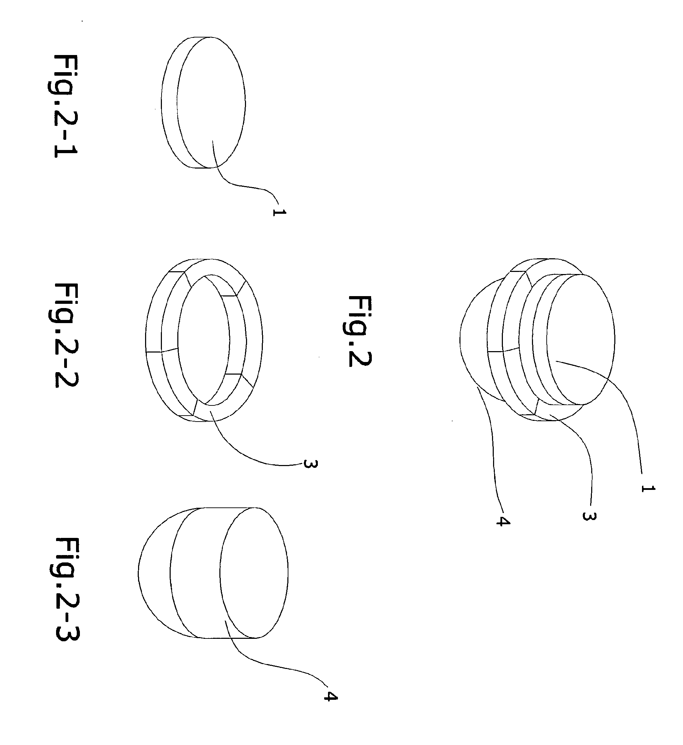

Fig. 2 is a sectional view showing embodiment 2 of the invention, wherein the ultraviolet detector/indicator is a column comprised of a light receiving front 1 installed on one end, a light emitting front 4 installed on the other end as well as a colorimetric scale 3, which is printed with various color shades and sleeves the column body.

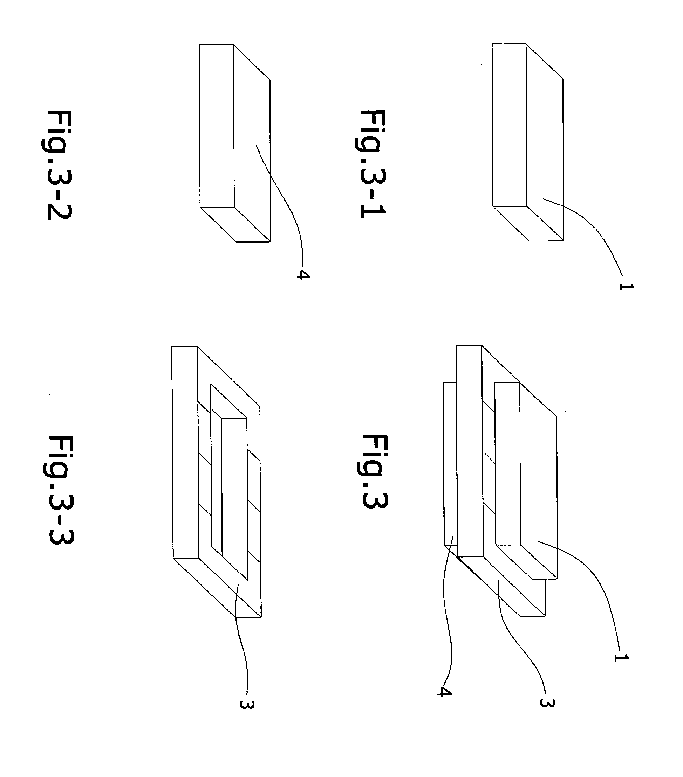

Fig. 3 is a sectional view showing embodiment 3 of the invention, wherein the ultraviolet detector/indicator is a cake comprised of a light receiving front 1 installed on one end, a light emitting front 4 installed on the other end as well as a colorimetric scale 3, which is printed with various color shades and edged on the cake.

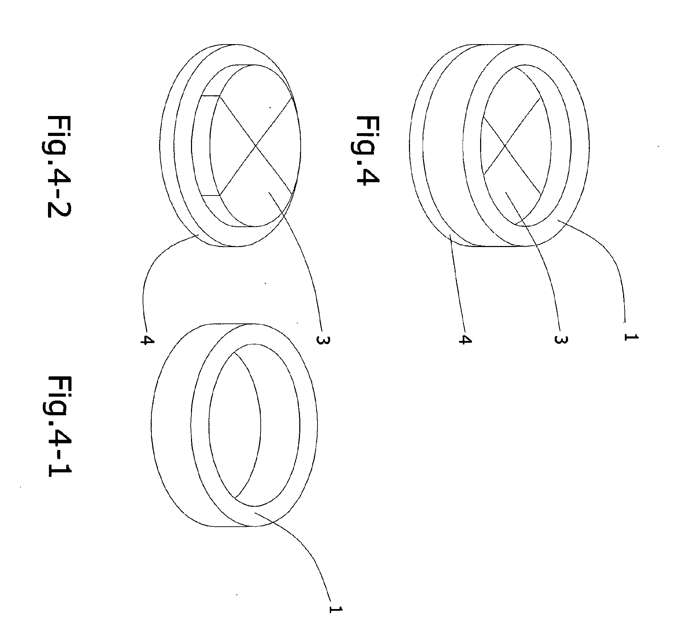

Fig. 4 is a sectional view showing embodiment 4 of the invention, wherein the ultraviolet detector/indicator is a ring, comprising of a light receiving front 1 installed on one end, a light emitting front 4 installed on the other end as well as a colorimetric scale 3, which is printed with various color shades and embraced by the ring.

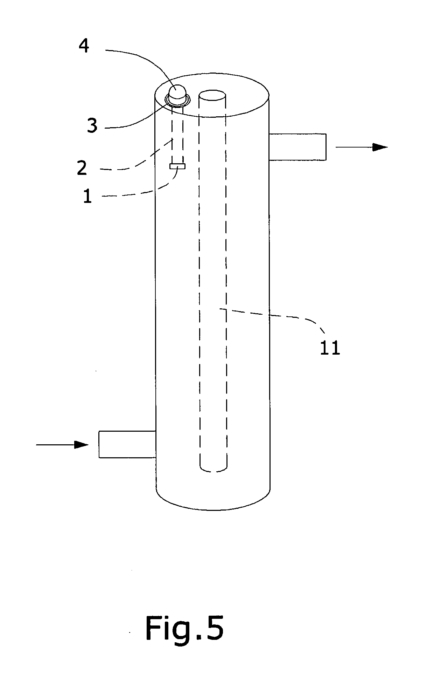

Fig. 5 is a sectional view showing application 1 of the invention where the ultraviolet detector/indicator is installed on the external wall of the enclosure of a photocatalyzed liquid processing apparatus 10, wherein an ultraviolet lamp 11 is installed for sterilization.

The ultraviolet detector/indicator for application 1 per Fig. 5 comprises of a light emitting front 4, a light guide unit 2 extending from the light emitting front down to connect the light receiving front, a light receiving front 1 as well as a colorimetric scale 3, cincturing the walls od the enclosure of the light receiving front 4.

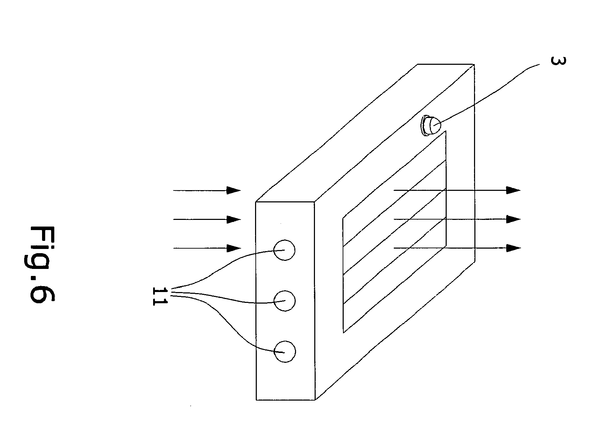

Fig. 6 is a sectional view showing application 2 of the invention where the ultraviolet detector/indicator is installed on the enclosure of a photocatalyzed vapor processing apparatus 10, wherein the ultraviolet lamp 11 is installed for sterilization. The light emitting front 4 and colorimetric scale 3 protrude from the enclosure.

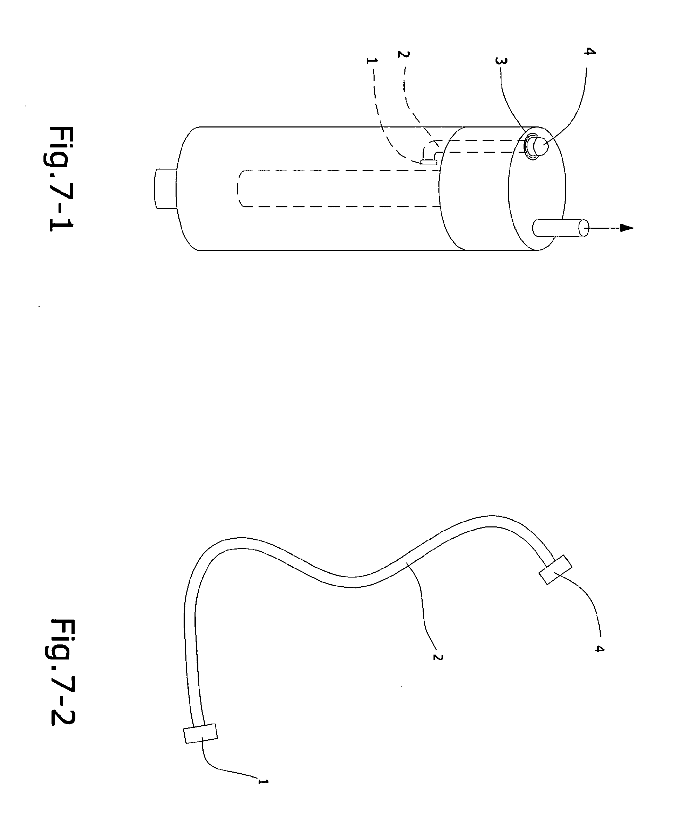

Fig. 7-1 is a sectional view showing application 3 of the invention where the ultraviolet detector/indicator is installed in a photocatalyzed liquid processing apparatus comprising of an ultraviolet lamp for sterilization.

Fig. 7-2 is a sectional view showing light guide unit 2 of the ultraviolet detector/indicator of Fig. 7-1, which connects the light emitting front 4 and light receiving front 1 and is made of optical fiber.

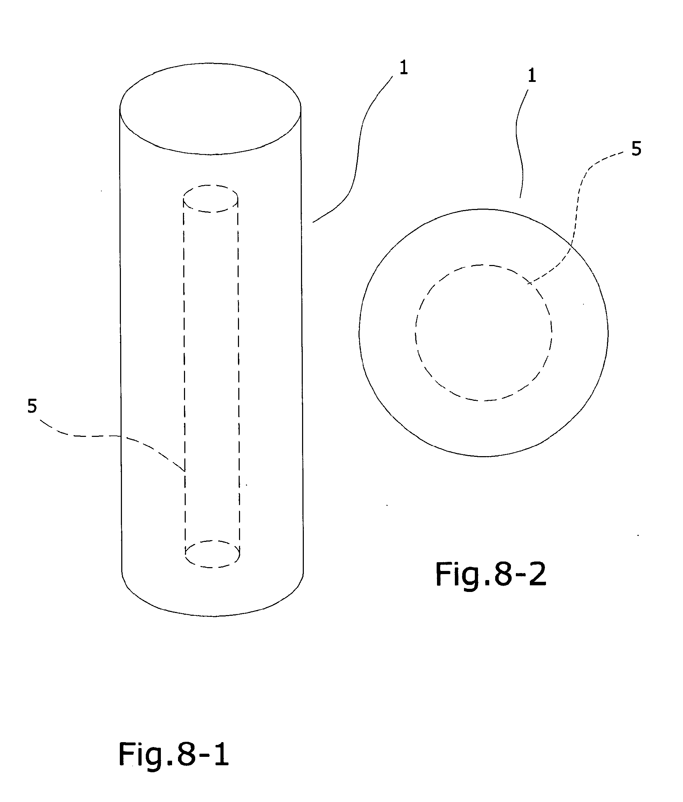

Fig. 8-1 and 8-2 are structural views of the light receiving fronts 1, wherein a hollow column and a sphere respectively contain the material 5 transferring ultraviolet energy into visible light. The material may be fluorescent powder.

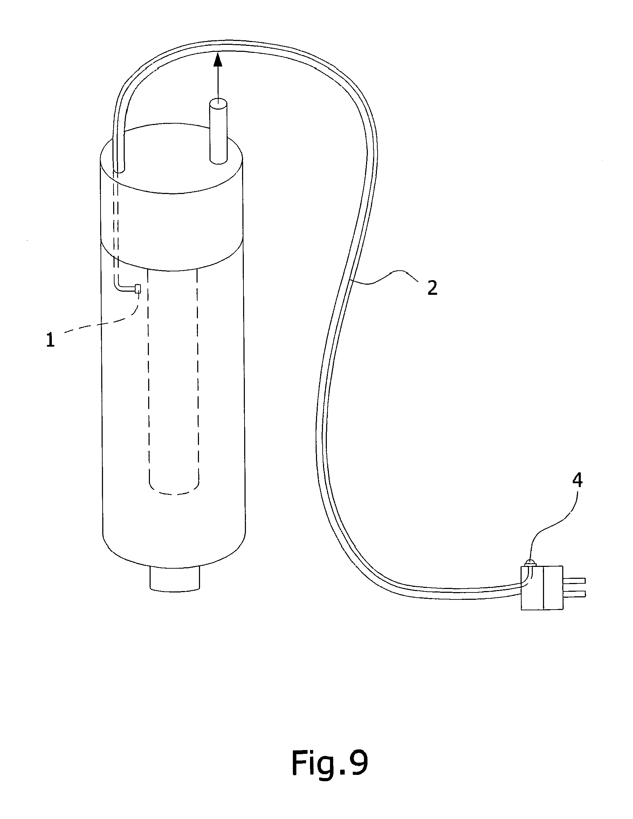

Fig.9 is a sectional view showing application 4 of the invention where the ultraviolet detector/indicator is installed in a photocatalyzed liquid processing apparatus and the light receiving front 1 is connected to the light emitting front 4 at the remote end by a power cable and a flexible wired light guide unit 2, made of optical fiber.

To sum up, the ultraviolet detector/indicator of the invention comprises of a light receiving front 1, which is an object pervious to ultraviolet and contains the material 5 transferring ultraviolet energy into visible light. The material may be silica gel and its derivatives, PTFE (Polytetrafluoroethylene) and its derivatives, or PMMA (Poly Methyl Methacrylate) and its derivatives. Upon receiving the ultraviolet, the light receiving front 1 may transfer its energy via the material 5 into colored visible light to be emitted by the light emitting front 4 or transfer its energy via the light guide unit 2, which contains material that strengthens the ultraviolet or adjusts the spectrum into visible light to be emitted by the light emitting front 4. In addition, a colorimetric scale 3 printed with various color shades assists the user in verifying ultraviolet strengths lest aging or damage of the ultraviolet lamp should fail all the functions of the apparatus.

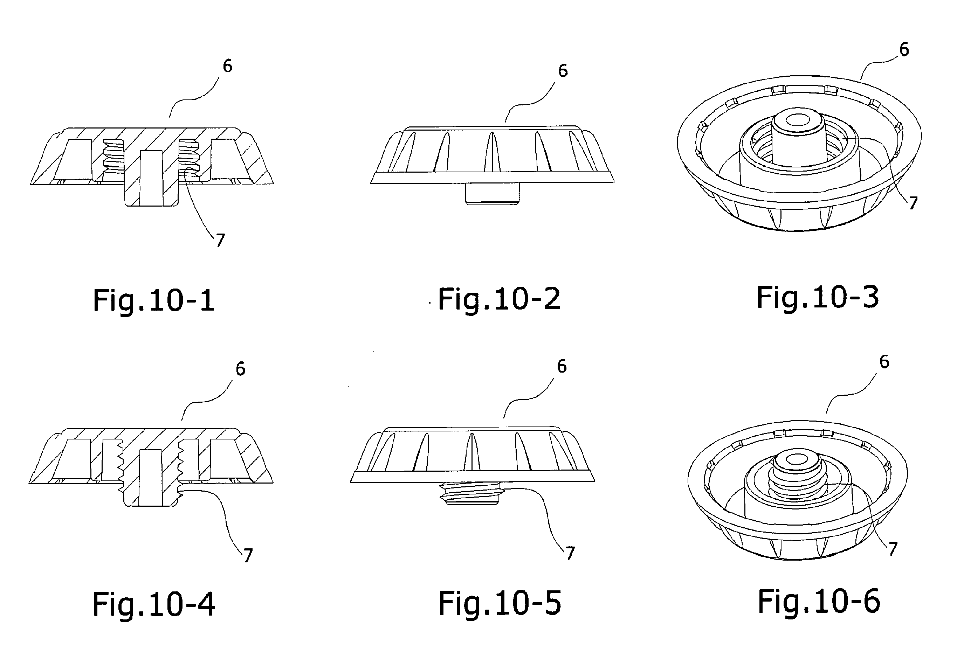

Fig. 10-1, 10-2, 10-3, 10-4, 10-5, and 10-6 are structural views of two embodiments of an interface 6, which connects to the upper or lower end where the enclosure is installed in the ultraviolet detector/indicator so as to effectively prevent aging or damage of the ultraviolet lamp from failing all the functions of the apparatus. The interface 6 also facilitates replacement of the ultraviolet detector/indicator installed in the enclosure, and can be a threaded cock 7.
In conclusion, the "ultraviolet detector/indicator" of the invention substantively prevents aging or damage of the ultraviolet lamp from failing all the functions of the apparatus so as to possess the "practicality" and the "advancement" in the industry field. Further, the structure of the invention has never been disclosed in any publication or for any utilization prior to this patent application. Therefore, the structure of the invention conforms to requirements of the new utility model and is submitted per this document for a patent application according to the Patent Act.

## Claims

1. An ultraviolet detector/indicator, the characteristic lies in: the ultraviolet detector/indicator is a column, hemisphere, cake, or wire that at least comprises of a light receiving front at one end and a light emitting front on the other.

2. The "ultraviolet detector/indicator" of claim 1, the characteristic lies in: a light guide unit, which is a column or a flexible wire, is installed between the back of the light receiving front and light emitting front.

3. The "ultraviolet detector/indicator" of claim 1, the characteristic lies in: the material strengthening the ultraviolet or adjusting the spectrum permeates through the ultraviolet detector/indicator.

4. The "ultraviolet detector/indicator" of claim 1, the characteristic lies in: a colorimetric scale of various color shades is installed around or beside the light emitting front.

5. The "ultraviolet detector/indicator" of claim 1, the characteristic lies in: the light emitting front is an object pervious to ultraviolet and wherein permeates the material transferring the ultraviolet energy into colored visible light.

6. The "ultraviolet detector/indicator" of claim 5, the characteristic lies in: the material permeating through the light receiving front is silica gel and its derivatives, PTFE (Polytetrafluoroethylene) and its derivatives, or PMMA (Poly Methyl Methacrylate) and its derivatives.

7. The "ultraviolet detector/indicator" of claim 5, the characteristic lies in: the material permeating through the light emitting front is able to transfer the ultraviolet energy into red light.

8. The "ultraviolet detector/indicator" of claim 5, the characteristic lies in: the material permeating through the light emitting front is able to transfer the ultraviolet energy into green light.

9. The "ultraviolet detector/indicator" of claim 5, the characteristic lies in: the material permeating through the light emitting front is able to transfer the ultraviolet energy into yellow light.

10. The "ultraviolet detector/indicator" of claim 5, the characteristic lies in: the material permeating through the light emitting front is fluorescent powder.

11. The "ultraviolet detector/indicator" of claim 5, the characteristic lies in: the material permeating through the light emitting front is phosphorous.

12. The "ultraviolet detector/indicator" of claim 1, the characteristic lies in: the light receiving front is a hollow cubic, which contains the material transferring the ultraviolet energy into colored visible light.

13. The "ultraviolet detector/indicator" of claim 1, the characteristic lies in: characters or signs, pervious or opaque to the ultraviolet, are installed on the surface of the light emitting front.

14. The "ultraviolet detector/indicator" of claim 1, the characteristic lies in: an interface connecting to the enclosure is available.
